(19) Europäisches Patentamt / European Patent Office / Office européen des brevets

(11) **EP 3 902 385 B1**

(12) **EUROPEAN PATENT SPECIFICATION**

(45) Date of publication and mention
of the grant of the patent:
**14.05.2025  Bulletin 2025/20**

(21) Application number: **19839434.8**

(22) Date of filing: **23.12.2019**

(51) International Patent Classification (IPC):
**A01B 61/02** *(2006.01)*     **A01B 71/06** *(2006.01)*
**B60K 25/06** *(2006.01)*

(52) Cooperative Patent Classification (CPC):
**A01B 61/025; A01B 71/06; B60K 25/06;**
B60Y 2200/221

(86) International application number:
**PCT/IB2019/061298**

(87) International publication number:
**WO 2020/136559 (02.07.2020 Gazette 2020/27)**

(54) **DEVICE FOR THE ENGAGEMENT AND DISENGAGEMENT OF A POWER TAKE-OFF IN A VEHICLE WITH A TRAILER OPERATIVELY JOINED THERETO WITH A CARDAN**

**VORRICHTUNG ZUM EINSCHALTEN UND AUSSCHALTEN DER LEISTUNGSÜBERTRAGUNG IN EINEM FAHRZEUG MIT ÜBER EIN KARDANGELENK OPERATIV VERBUNDENEM ANHÄNGER**

**DISPOSITIF D'ENGAGEMENT ET DE DÉSENGAGEMENT D'UNE PRISE DE FORCE DANS UN VÉHICULE AVEC UNE REMORQUE ASSOCIÉE OPÉRATIVEMENT AU VEHICULE AVEC UNE CARDAN**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2018  IT 201800021169**

(43) Date of publication of application:
**03.11.2021  Bulletin 2021/44**

(73) Proprietor: **Etacarinae S.R.L.**
**15011 Aqui Terme AI (IT)**

(72) Inventors:
• **VERCELLINO, Pierangelo**
**15011 Acqui Terme (IT)**
• **RAGANELLI, Valerio**
**15010 Prasco (IT)**

(74) Representative: **Giraldi, Elisa et al**
**Notarbartolo & Gervasi S.p.A.**
**Viale Achille Papa, 30**
**20149 Milano (IT)**

(56) References cited:
WO-A1-2013/175097      WO-A1-2017/109746
WO-A1-2017/125863      WO-A1-2019/082213
DE-U1- 202004 001 265

**Description**

The present invention relates to a device for the engagement and disengagement of a power take-off in a vehicle with a trailer operatively joined thereto with a cardan. In particular, the present invention is applicable, albeit not exclusively, to a tractor or a similar agricultural vehicle.

Farming is one of man's oldest activities. The importance thereof is vital, since the survival itself of human beings to a large extent depends on the consumption of products from farming and zootechnical activities; also zootechnical activities partly depend on farming, with regard to feeding the animals.

A farmer is required to perform various operations. The most important ones certainly are sowing and harvesting; no product can be obtained without the first and the fruits of the labor performed are not obtained without the second.

However, there are many activities related to these two steps, which simply allow or facilitate them, for example by increasing productivity or avoiding damage to harvests from parasites and/or weeds. These operations include ploughing, spraying plants with anti-parasite or in any case, remedial substances, pruning, cutting and others.

Agriculture was born when man decided to settle down and started selecting the seeds from which plants grew which were similar to those from which they were obtained, so as to obtain improved harvests as compared to the ones of wild products. Obviously, farming was entirely manual at that time. Manual ploughs were used for example, which are still used today in certain areas of Africa. They have contained costs, do not involve consumption; however, the use thereof results in rather poor results in relation to the associated hard work, with lengthy work times, since the operations are highly laborious and slow.

A first step forward was obtained by subduing pairs of oxen and having them draw farm equipment to move and/or use it.

Clear progress was obtained for the most part during the last century, with the change to modern agricultural machinery, in particular to tractors. Tractors practically replace the oxen in drawing the plough and other farm equipment. Modern tractors are vehicles provided with an internal combustion engine (spark-ignition or diesel engine), with large wheels or bets to obtain stability also on impervious ground, and they have hitches for various types of equipment. Generally, loads are transported according to two different methods: carried and drawn.

The carried load is fastened to the three-point linkage, which is usually carried at the front by the tractor. The drawn load generally consists of a trailer, for the most part fastened to the so-called tractor drawbar; when the trailer carries agricultural machinery, same can be fed in an independent manner.

The most common method for feeding power to agricultural machinery carried in a trailer drawn by a tractor however is the one of connecting a shaft with a cardan joint, commonly called a cardan. One end of the cardan is fastened to a rotating shaft of the machine, so as to give it the power required, and the other end is fastened to the power take-off of the tractor: an extension shaft of the drive shaft of the tractor; thereby, the power required is drawn from the tractor, so as not to require the presence of a second motor system. The rotation of the tractor motor thus results in the rotation of the shaft and the operation of the drawn machine. The cardan joint ensures that any oscillations in the motion of the tractor and of the trailer, which as is known occur on usually uneven grounds, do not result in the breaking of the shaft which transmits the power. The cardan joints here are very effective, however they have limits: if the angle formed on the cardan between the two parts of the shaft is smaller than a given measurement, the rotation of the shaft necessarily results in the breaking of the cardan.

The regular operating method of an operator of a tractor of this type provides keeping the angle that forms on the cardan under tight control: when it is noted that the two parts of the shaft narrow excessively, the operator uncouples the power take-off and puts it into idle position. Thereby, the rotation of the shaft stops, so that the cardan joint does not receive stresses with several components and remains integral, thus "closing". However, there is also the stop of the rotation of the motor of the drawn machine, which thus discontinues its activity until the power take-off is coupled again. This occurs as soon as the operator detects again that the angle is no longer dangerous .

Summarizing, it is highly important for the power take-off to be promptly uncoupled, otherwise the cardan will break, with the subsequent need for replacement, with all that such a replacement involves in terms of time, costs and slow-down of the work. However, it is just as important for the power take-off to be promptly coupled again, otherwise the work will be poorly done and will require repeating, also in this case with loss of time and costs and sometimes with damage to the harvest, associated for example with the excess or lack of a substance with which the plants are to be sprayed.

Driving a tractor is a complex operation and involves various dangers: it is rather frequent for the operator not to have the required tranquility for performing these operations in the best way possible and breaks or work repetitions due to operator distractions unfortunately are an everyday affair.

US2003/0 024 782 describes a tractor with load carried with a hydraulic coupling and capable of protecting the cardan from breaking, which would occur due to too small angles in lifting/lowering the load. The uncoupling occurs through a solenoid valve.

WO2017/109 746 describes a vehicle with drawn trailer, operatively connected thereto with a cardan, comprising means for detecting the angle between vehicle and cardan or between vehicle and trailer or between trailer and cardan, and comparison means with a threshold value, apt to uncouple the power take-off below a threshold value and to couple it again above the threshold value, said means being arranged about the cardan.

WO2017/050 265 resolves the problem of the disengagement and engagement of the power take-off using means for detecting the angle between the driving wheels and the vehicle axis and correlating such an angle with the angle on the cardan according to a specific algorithm.

In a more sophisticated manner, WO2017/000 234 provides for a magnetic emitter to be arranged on the vehicle or on the trailer, and there is an electronic bearing on the trailer or on the vehicle. The angle formed between the two magnetic devices is easily correlated to the angle on the cardan by virtue of a specific algorithm.

All these systems have significant merits but all have certain accuracy problems in identifying the mutual positions of the components, so that the threshold angle is to be set to such a value as to lengthen the discontinuation times of the work to have increased safety.

Further examples of devices according to the prior art for the engagement and the disengagement of a power take-off for a vehicle with a trailer operatively connected to said vehicle by a cardan are known from prior art document WO 2017/125863.

The problem at the basis of the invention is to propose a disengagement and re-engagement system of the power take-off of a vehicle with trailer operatively connected thereto through a cardan which overcomes the mentioned drawbacks and which allows an accurate localization of the angle between vehicle and trailer so as to reach the disconnection of the power take-off only and for the whole time required. This object is achieved by a device for the engagement and the disengagement of a power take-off in a vehicle with a trailer, operatively connected thereto through a cardan, comprising a detection device of data pertaining to the angle between an arm of the cardan and the projection of the other arm of the cardan beyond the cardan itself and comparison means of the angle between one cardan arm and the projection of the other arm of the cardan beyond the cardan itself and one or more preset threshold angles, apt to disengage the power take-off when said angle between one cardan arm and the projection of the other arm of the cardan beyond the cardan itself is greater than a threshold angle and to engage it again when said angle between one cardan arm and the projection of the other arm of the cardan beyond the cardan itself is smaller than another threshold angle (equal to or different from the first one), characterized in that said detection device consists of a pair of position determining systems, arranged one in the vehicle area and one in the trailer area, and in that the angle to be compared against the threshold angles is calculated with the formula:

$$\varepsilon = 180° - \arccos\left[1/2(N/M + M/N - L^2/MN)\right] \qquad (14)$$

wherein: M is the distance between one position determining system and the cardan joint,
N is the distance between the other position determining system and the cardan joint,
L is the distance between the two position determining systems,
$\varepsilon$ is the angle between the cardan arm and the projection of the other arm of the cardan beyond the cardan itself. The dependent claims describe preferential features of the invention.

Further features and advantages of the invention will in any case be more apparent from the following detailed description of a preferred embodiment, given by mere way of non-limiting example and depicted in the accompanying drawings, in which:

fig. 1 is a diagrammatic depiction of a vehicle with a trailer, to which the device according to the present invention is applied, under rectilinear operating condition;
fig. 2 is a diagrammatic depiction as in fig. 1, but under curved condition; and
fig. 3 is a block diagram showing the operation of a device according to the present invention.

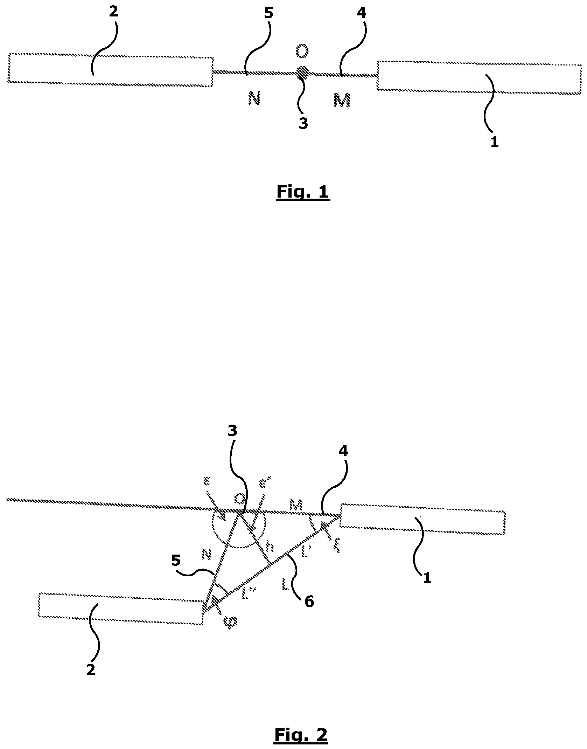

Fig. 1 diagrammatically depicts a vehicle 1 with a trailer 2, to which a cardan 3 (also indicated by O) comprising two arms 4 and 5 is operatively connected.

Vehicle 1 may be a farming tractor, but also any other vehicle capable of drawing a trailer and where the presence of a cardan is required. The connection by means of cardan 3 is purely operative, since drawing trailer 2 occurs through a hook connected to the eye of the tractor or the like.

The trailer generally is a carriage which carries an agricultural operating machine of known type, such as a sprayer, a brush cutter, a reaper or other.

Arm 4 of cardan 3 generally is connected to the power take-off of the tractor so as to transmit the power to the machine on trailer 2 required for the operation thereof.

Sensors (not depicted in the drawings) advantageously may be provided on the two sides, the sensors being adapted to detect the presence of vegetation at the useful distance for performing the operation whereby a machine transported by trailer 2 is designed. The sensors may be arranged on vehicle 1, on trailer 2 or on both. Thereby, in addition to the angle on cardan 3, the actual need and possibility of carrying out work is taken into consideration.

Said sensors preferably are arranged inclined with respect to the ground by such an angle so as to avoid detecting objects at too great a distance compared to the capabilities of the machine loaded on trailer 2. Said sensors are oriented from the bottom upwards. Sensors of any type may be used, for example selected among feelers, photoelectric cells, radars, MEMS and the like. Such sensors are easily available on the market, they are affordable and they generally are quite efficient.

According to the present invention, two position determining devices are arranged on vehicle 1 and on trailer 2. There is a distance M between the position determining device on vehicle 1 and cardan 3, and there is distance N between the position determining device arranged on trailer 2 and cardan 3. Any position determining device may be used according to the present invention, however said position determining systems preferably are global positioning systems, known as GPSs, given the efficiency and the broad availability on the market thereof. The two position determining devices communicate with a processing unit, such as an electronic processor, a microprocessor or a control unit, on board the vehicle itself. Said processing unit is connected to a device capable of controlling the engagement and disengagement of the power take-off of the vehicle. Such a device may be of any known type, for example a microswitch, a relay or a remote control switch.

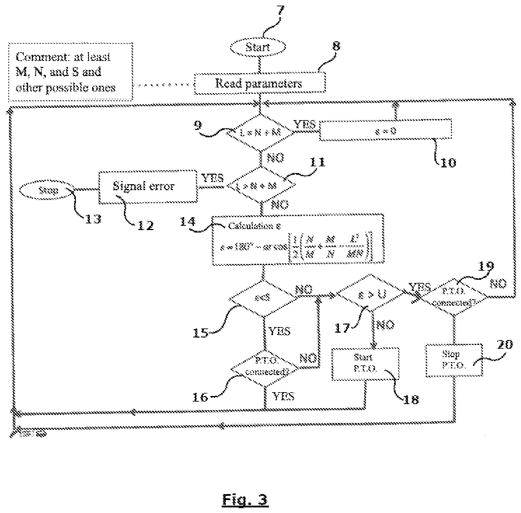

The operation of the device according to the present invention is now described, additionally referring to the diagram in fig. 3, which specifically accompanies the present description for this purpose.

In fig. 1, vehicle 1 and trailer 2 are shown in rectilinear operation; the angle between the arms 4 and 5 of cardan 3 is 180°. Fig. 2 instead shows a circumstance in which vehicle 1 takes on a curve, thus creating an angle between the arms 4 and 5 which is smaller than 180°; the more narrow the curve, the smaller the angle. Fig. 2 shows four different angles: angle $\xi$ is the angle between the arm 4 of cardan 3 and the rectilinear segment 6 which joins the two position determining devices, i.e. the one arranged on vehicle 1 and the one arranged on trailer 2; angle $\varphi$ is the angle between the arm 5 of cardan 3 and the rectilinear segment 6 which joins the two position determining devices, i.e. the one arranged on vehicle 1 and the one arranged on trailer 2; angle $\varepsilon$ is the angle between the arm 5 of cardan 3 and the projection of the arm 4 of cardan 3 beyond cardan 3 itself; and angle $\varepsilon'$ is the angle between the arms 4 and 5. A segment h is also identified, which is the height starting from cardan 3 and reaching segment 6. Obviously, segment 6 and the angles $\xi$, $\varphi$, $\varepsilon$ and $\varepsilon$ continuously vary during operation, in particular in curves. Angle $\varepsilon$ is to be compared with a threshold value: when the angle is greater than said threshold, cardan 3 risks breaking. For this reason, when angle $\varepsilon$ exceeds said threshold, the device according to the present invention is to disengage the power take-off so that the cardan stops rotating and any angle may be formed, without the risk of breaking. Similarly, when angle $\varepsilon$, with the power take-off uncoupled, goes below a threshold (that may be equal to or different from the preceding one), the device according to the present invention intervenes to couple the power take-off again and operating resumes normally. To obtain all this, it is necessary for the device according to the invention to detect angle $\varepsilon$ and compare it with the uncoupling threshold (which is identified with letter S) and with the coupling threshold (identified with letter S'). Generally, S>S' exists, so as to achieve increased safety. The thresholds S and S' do not have dimensions and are expressed in degrees, like the angles $\xi$, $\varphi$, $\varepsilon$ and $\varepsilon'$. First, angle $\varepsilon$ is to be measured in order to operate the device according to the present invention, since the comparison with the thresholds occurs in the processing system, according to methods known in the art and in computer science.

From the most basic geometry, it is known that

$$\varepsilon = 180° - \varepsilon' \tag{1}$$

Again, from the basic geometry:

$$\varepsilon' = 180° - \varphi - \xi \tag{2}$$

Combining equations (1) and (2) results in:

$$\varepsilon = 180° - (180° - \varphi - \xi) \tag{3}$$

which may be solved to result in:

$$\varepsilon = \varphi + \xi \tag{4}$$

As seen in fig. 2, segment 6 is divided, by height h, into two parts of length, L' and L", respectively. According to trigonometry, the following can be obtained:

$$L' = M \cos \xi \qquad (5)$$

and

$$L'' = N \cos \varphi \qquad (6)$$

wherein M is the distance between the position determining device on vehicle 1 and cardan 3, and N is the distance between the position determining device on trailer 2 and cardan 3. The sum of L' + L'' results in length L of segment 6. The values of L', L'', M and N are known; M and N when cardan 3 is connected to vehicle 1 and to trailer 2 (and are directly set in the processing unit of the device according to the present invention) and L' and L'' from the position determining devices, moment by moment. Again from trigonometry, the following is obtained:

$$N \operatorname{sen} \varphi = h = M \operatorname{sen} \xi \qquad (7)$$

Therefore:

$$\xi = \operatorname{arcsen} (N/M \operatorname{sen} \varphi) \qquad (8)$$

from which:

$$L = M \cos [\operatorname{arcsen} (N/M \operatorname{sen} \varphi)] + N \cos \varphi \qquad (9)$$

In the particular case in which M = N, the formula (9) is simplified, but this cannot occur in any circumstance and does not depend on an arbitrary selection of the individual assembling the device according to the present invention.
According to what is indicated in Vicente Vàzquez Queipo, Madrid 1964,

$$L^2 = N^2 + M^2 - 2MN \cos \varepsilon' \qquad (10)$$

Dividing both items of the equation (10) by MN, the following is obtained:

$$L^2/MN = N^2/MN + M^2/MN - 2 \cos \varepsilon' \qquad (11)$$

solving, the following is obtained:

$$L^2/MN - N/M - M/N = -2 \cos \varepsilon' \qquad (12)$$

By multiplying both items of the equation (12) by -1 and dividing them by 2, the following is obtained:

$$\cos \varepsilon' = 1/2(N/M + M/N - L_2/MN) \qquad (13)$$

By including equation (13) in equation (1), the following is obtained:

$$\varepsilon = 180° - \operatorname{arcos} [1/2(N/M + M/N - L^2/MN)] \qquad (14)$$

which is the equation which allows the value of angle $\varepsilon$ to be obtained on the basis of the related position of the position detectors on vehicle 1 and on trailer 2.
The device according to the present invention constantly determines the value of L by virtue of the position determining devices on vehicle 1 and on trailer 2. The values are entered in a processing device, where also the values of M and N and the threshold values S and S' are recorded, set in known manner. The relationship S = S' may be valid, wherein S and S' are the two preset threshold angles in the device, or S > S' may be valid, wherein S and S' are the two preset threshold angles in the device. Albeit theoretically possible and certainly falling within the scope of the present invention, the case of S < S' has such problems as not to be very practical: if S' is in the range which ensures safety for cardan 3, the work could be unnecessarily discontinued for too long a time, while if S is at the limit of the safety range for the integrity of cardan 3, the risk of breaking thereof upon the engagement again of the power take-off would be too high. Using the formula (14), the processing device receives the point target of L and, from this and the other data set beforehand, calculates the point target of $\varepsilon$ and compares it with the thresholds S and S'. If, with the power take-off coupled, $\varepsilon > S$, the device sends a signal to a device which operates the uncoupling of cardan 3. If, with the power take-off uncoupled, $\varepsilon < S'$, the device sends a signal to the coupling/uncoupling device which couples the power take-off again. Thereby, there is an operation of cardan 3 in complete safety, minimizing the areas not subjected to processing normally performed by the machine carried by trailer 2. An acoustic signal, an optical signal, a command to a CAN-BUS, a command to a relay, a command to an actuator or the like, may be provided when S is exceeded and upon the return to below S'.

To provide a better comprehension of the operation of the present invention, as mentioned above reference is now made to fig. 3.

The device according to the present invention is started up and the power take-off is coupled in step 7; the parameters M and N are entered in the processing unit and L is read in successive step 8. Step 9 checks whether L = N+M, which is the rectilinear operating circumstance of vehicle 1 and of trailer 2. If the response is YES, step 10 is performed, i.e. $\varepsilon = 0$ and the operation of the power take-off continues; then step 9 is returned to. If the response is NO, then successive step 11 is performed, in which it is checked if L exceeds the value of the sum of M and N (indication of the detachment of trailer 2 from vehicle 1); here, in step 12, a signal of an abnormal state is sent to the system with any (acoustic or warning light) alarm signal or even with the stopping of the vehicle; the power take-off is certainly stopped in step 13. If the response is NO, then successive step 14 is performed.

In step 14, the value of $\varepsilon$ is calculated according to the equation (14). In the successive step 15, the value of $\varepsilon$ is compared with the value of the threshold angle S. If the value of $\varepsilon$ is smaller than the one of S, step 16 is performed, in which it is checked whether the power take-off is coupled. If it is coupled, then step 9 is returned to and the cycle is started again. If it is not coupled, as well as if $\varepsilon$ is greater than S, step 17 is performed, wherein the assessment is made whether $\varepsilon$ is greater than the second threshold value S', which normally is less than or equal to S. If the response is negative, step 18 is performed, wherein the power take-off is coupled and then step 9 is returned to. If the response is affirmative, step 19 is performed, in which it is checked whether the power take-off is coupled. If it is not coupled, then step 9 is returned to and the cycle is started again. If it is coupled, then step 20 is performed, in which the power take-off is uncoupled, then step 9 is performed and the cycle is started again.

As seen from the preceding description, the heart of the invention lies in the correct use of the equation (14) and in the comparison between the angle actually on cardan 3 and greater and lesser threshold angles (S and S').

According to a preferred embodiment of the invention and as seen above, a series of sensors may be provided on each of the sides of vehicle 1 and/or trailer 2, the sensors being apt to detect the presence of vegetation in the operating area of vehicle 1 and of trailer 2. Should there be the conditions for coupling the power take-off downstream of the above-described process, the presence of vegetation detected on both sides of vehicle 1 and/or of trailer 2 ensures the power take-off is left coupled and any machines on the trailer 2 continue operating. Should, despite the conditions existing for the operation of the power take-off, the absence of vegetation on one or both sides be verified, the signal of such an absence would be sent to the processing unit which would send a command to disengage the power take-off or to discontinue the processing on the side or on the sides where there was no vegetation. Should the sensors detect vegetation presence again, the processing unit would give the signal to restart the power take-off or to restart the discontinued processing. Therefore substantially when, despite the conditions existing for the operation of the power take-off, the absence of vegetation on one or both sides is verified, the device according to the invention sends a signal of such an absence to the processing unit which sends a command to disengage the power take-off or to discontinue the processing on the side or on the sides where there was no vegetation, and once the sensors detect the presence of vegetation again, the processing unit gives a signal to restart the power take-off or to restart the discontinued processing.

The device according to the present invention thus allows the power take-off to be operated and the processing to be executed by a machine on trailer 2 for as long as possible, under maximum safety conditions and without using the operator in the tasks of the disengagement and engagement again of the power take-off, which could distract the operator from other maneuvers. Thereby, there is increased safety, both with regard to the integrity of the cardan and with regard to the operator him/herself; moreover, the risk is not run of needing to return to perform a passage in an area where the processing should have been performed and was not performed due to the distraction of the operator which resulted in the power take-off not being coupled again once the critical conditions were overcome.

The embodiment with the sensors, especially if a correct adjustment of the inclination thereof is made, allows avoiding the machine carried by trailer 2 to operate empty, so as to avoid damage to the environment or equipment. Position determining devices, GPSs in particular, are devices which are highly easy to find and at a relatively low cost, whereby the device according to the present invention does not have prohibitive production costs, rather absolutely affordable costs, which is what makes the present invention even more appealing. This embodiment thus also allows the operation of the machine on trailer 2 to be automated. When the machine is a sprayer, material wastage will thereby be avoided.

It is in any case intended for the invention not to be limited to the particular arrangement disclosed above, which is only one embodiment thereof, rather various variants are possible, all within the capability of those skilled in the art, without departing from the scope of protection of the invention itself, as defined by the following claims.

LIST OF REFERENCE SYMBOLS

| | |
|---|---|
| 1 | Vehicle |
| 2 | Trailer |
| 3 | Cardan |
| 4 | Arm (of 3) |
| 5 | Arm (of 3) |
| 6 | Distance between two sensors |
| 7 | Process step |
| 8 | Process step |
| 9 | Process step |
| 10 | Process step |
| 11 | Process step |
| 12 | Process step |
| 13 | Process step |
| 14 | Process step |
| 15 | Process step |
| 16 | Process step |
| 17 | Process step |
| 18 | Process step |
| 19 | Process step |
| 20 | Process step |
| S | First threshold angle |
| S | Second threshold angle |

**Claims**

1.  Device for the engagement and the disengagement of a power take-off for a vehicle (1) with a trailer (2), the trailer being operatively connected to the vehicle through a cardan (3), the device comprising a detection device of data pertaining to the angle ($\varepsilon$) between an arm (5) of the cardan and the projection of the other arm (4) of the cardan (3) beyond the cardan (3) itself and comparison means of the angle ($\varepsilon$) between one cardan arm (5) and the projection of the other arm (4) of the cardan (3) beyond the cardan (3) itself and one or more preset threshold angles (S, S'), apt to disengage the power take-off when said angle ($\varepsilon$) between one cardan arm (5) and the projection of the other arm (4) of the cardan (3) beyond the cardan (3) itself is greater than a threshold angle (S) and to engage it again when said angle ($\varepsilon$) between one cardan arm (5) and the projection of the other arm (4) of the cardan (3) beyond the cardan (3) itself is smaller than another threshold angle (S'), the other threshold angle (S') being equal to or different from the first one, **characterized in that** said detection device consists of a pair of position determining systems, suitable to be arranged one in the vehicle area and one in the trailer area, and **in that** the comparison means is configured such that the angle to be compared against the threshold angles is calculated with the formula:

$$\varepsilon = 180° - \text{arcos} \left[ 1/2(N/M + M/N - L^2/MN) \right] \qquad (14)$$

wherein: M is the distance between one position determining system and the cardan joint,
N is the distance between the other position determining system and the cardan joint,
L is the distance between the two position determining systems,
$\varepsilon$ is the angle between the arm (5) of the cardan (3) and the projection of the other arm (4) of the cardan (3) beyond the cardan (3) itself.

2.  Device as in claim 1), **characterized in that** said position determining systems are global positioning systems, known as GPSs.

3.  Device as in claim 1) or in claim 2), **characterized in that** sensors are provided on both sides of the vehicle (1) or of the trailer (2) or of both, apt to detect the presence of vegetation at the useful distance for performing the operation for which a machine transported by the trailer (2) is designed.

4. Device as in claim 3), **characterized in that** said sensors are arranged inclined with respect to the ground by such an angle so as to avoid detecting objects at too great a distance compared to the capabilities of the machine loaded on the trailer (2).

5. Device as in claim 3) or in claim 4), **characterized in that** one among feelers, photoelectric cells, radars, MEMS is chosen as sensor.

6. Device as in any one of the preceding claims, **characterized in that** it is apt to signal an abnormal state and to arrest the power take-off if L exceeds the value of the sum of M and N.

7. Device as in any one of claims from 3) to 6), **characterized in that** when, despite the conditions for the operation of the power take-off are met, absence of vegetation on one or both sides is checked, it sends a vegetation absence signal to the processing unit, which sends a command to disengage the power take-off or to discontinue processing on the side or on the sides where there is no vegetation.

8. Device as in claim 7), **characterized in that** once the sensors detect vegetation presence again, the processing unit gives a signal to restart the power take-off or to restart the discontinued processing.

9. Device as in any one of the preceding claims, **characterized in that** the relationship S = S' applies, where S and S' are the two threshold angles preset in the device.

10. Device as in any one of claims 1) to 8), **characterized in that** the relationship S > S' applies, where S and S' are the two threshold angles preset in the device.

**Patentansprüche**

1. Vorrichtung zum Einschalten und Ausschalten einer Zapfwelle für ein Fahrzeug (1) mit einem Anhänger (2), wobei der Anhänger über ein Kardangelenk (3) operativ mit dem Fahrzeug verbunden ist, wobei die Vorrichtung eine Erfassungsvorrichtung für Daten, die den Winkel ($\varepsilon$) zwischen einem Arm (5) des Kardangelenks und der Projektion des anderen Arms (4) des Kardangelenks (3) über das Kardangelenk (3) selbst hinaus betreffen, und Mittel zum Vergleich des Winkel ($\varepsilon$) zwischen einem Kardangelenkarm (5) und der Projektion des anderen Arms (4) des Kardangelenks (3) über das Kardangelenk (3) selbst hinaus mit einem oder mehreren voreingestellten Schwellenwinkel (S, S') umfasst, welche Vorrichtung dazu geeignet ist, die Zapfwelle auszuschalten, wenn der Winkel ($\varepsilon$) zwischen einem Kardangelenkarm (5) und der Projektion des anderen Arms (4) des Kardangelenks (3) über das Kardangelenk (3) selbst hinaus größer als ein Schwellenwinkel (S) ist, und sie erneut einzuschalten, wenn der Winkel ($\varepsilon$) zwischen einem Kardangelenkarm (5) und der Projektion des anderen Arms (4) des Kardangelenks (3) über das Kardangelenk (3) selbst hinaus kleiner als ein anderer Schwellenwinkel (S') ist, wobei der andere Schwellenwinkel (S') gleich dem ersten ist oder sich davon unterscheidet,

**dadurch gekennzeichnet, dass** die Erfassungsvorrichtung aus einem Paar Positionsbestimmungssystemen besteht, von denen eines im Fahrzeugbereich und eines im Anhängerbereich angeordnet werden kann, und dadurch, dass das Vergleichsmittel derart konfiguriert ist, dass der mit den Schwellenwinkeln zu vergleichende Winkel mit der Formel berechnet wird:

$$\varepsilon = 180° - \text{arcos} \left[ 1/2(N/M + M/N - L^2/MN) \right] \qquad (14)$$

wobei: M die Entfernung zwischen einem Positionsbestimmungssystem und dem Kardangelenk ist,
N die Entfernung zwischen dem anderen Positionsbestimmungssystem und dem Kardangelenk ist,
L die Entfernung zwischen den zwei Positionsbestimmungssystemen ist,
$\varepsilon$ der Winkel zwischen dem Arm (5) des Kardangelenks (3) und der Projektion des anderen Arms (4) des Kardangelenks (3) über das Kardangelenk (3) selbst hinaus ist.

2. Vorrichtung nach Anspruch 1), **dadurch gekennzeichnet, dass** die Positionsbestimmungssysteme globale Positionsbestimmungssysteme sind, die als GPS bekannt sind.

3. Vorrichtung nach Anspruch 1) oder Anspruch 2), **dadurch gekennzeichnet, dass** die Sensoren auf beiden Seiten des Fahrzeugs (1) oder des Anhängers (2) oder beiden vorgesehen sind und dazu geeignet sind, das Vorhandensein von Vegetation in einer nützlichen Entfernung zum Durchführen des Vorgangs zu erfassen, für den eine von dem Anhänger (2) transportierte Maschine bestimmt ist.

4. Vorrichtung nach Anspruch 3), **dadurch gekennzeichnet, dass** die Sensoren in Bezug auf den Boden um einen solchen Winkel geneigt angeordnet sind, dass das Erfassen von Objekten in einer im Vergleich zum Leistungsvermögen der auf dem Anhänger (2) geladenen Maschine zu großen Entfernung verhindert wird.

5. Vorrichtung nach Anspruch 3) oder Anspruch 4), **dadurch gekennzeichnet, dass** der Sensor unter einem von Fühlern, Photozellen, Radargeräten, MEMS ausgewählt wird.

6. Vorrichtung nach einem der vorhergehenden Ansprüche, **dadurch gekennzeichnet, dass** sie dazu geeignet ist, einen anormalen Zustand zu signalisieren und die Zapfwelle zu unterbrechen, wenn L den Wert der Summe von M und N überschreitet.

7. Vorrichtung nach einem der Ansprüche 3) bis 6), **dadurch gekennzeichnet, dass** sie, trotz der Erfüllung der Bedingungen für den Betrieb der Zapfwelle, wenn die Abwesenheit von Vegetation auf einer oder beiden Seiten überprüft wird, ein Vegetationsabwesenheitssignal an die Verarbeitungseinheit sendet, die einen Befehl zum Ausschalten der Zapfwelle oder zum Unterbrechen der Bearbeitung auf der Seite oder den Seiten, auf denen sich keine Vegetation befindet, sendet.

8. Vorrichtung nach Anspruch 7), **dadurch gekennzeichnet, dass** die Verarbeitungseinheit, sobald die Sensoren wieder die Anwesenheit von Vegetation erfassen, ein Signal ausgibt, um die Zapfwelle wieder zu starten oder die unterbrochene Bearbeitung wieder zu starten.

9. Vorrichtung nach einem der vorhergehenden Ansprüche, **dadurch gekennzeichnet, dass** die Beziehung S = S' gilt, wobei S und S' zwei in der Vorrichtung voreingestellte Schwellenwinkel sind.

10. Vorrichtung nach einem der Ansprüche 1) bis 8), **dadurch gekennzeichnet, dass** die Beziehung S > S' gilt, wobei S und S' zwei in der Vorrichtung voreingestellte Schwellenwinkel sind.

**Revendications**

1. Dispositif pour l'engagement et le désengagement d'une prise de force pour un véhicule (1) avec une remorque (2), la remorque étant fonctionnellement reliée au véhicule par l'intermédiaire d'un cardan (3), le dispositif comprenant un dispositif de détection de données relatives à l'angle ($\varepsilon$) entre un bras (5) du cardan et la projection de l'autre bras (4) du cardan (3) au-delà du cardan (3) lui-même et des moyens de comparaison de l'angle ($\varepsilon$) entre un bras de cardan (5) et la projection de l'autre bras (4) du cardan (3) au-delà du cardan (3) lui-même et d'un ou plusieurs angles de seuil prédéfinis (S, S'), apte à désengager la prise de force lorsque ledit angle ($\varepsilon$) entre un bras de cardan (5) et la projection de l'autre bras (4) du cardan (3) au-delà du cardan (3) lui-même est supérieur à un angle de seuil (S) et à l'engager à nouveau lorsque ledit angle ($\varepsilon$) entre un bras de cardan (5) et la projection de l'autre bras (4) du cardan (3) au-delà du cardan (3) lui-même est inférieur à un autre angle de seuil (S'), l'autre angle de seuil (S') étant égal ou différent du premier,

**caractérisé en ce que** ledit dispositif de détection est constitué d'une paire de systèmes de détermination de position, adaptés pour être disposés l'un dans la zone du véhicule et l'autre dans la zone de la remorque, et **en ce que** les moyens de comparaison sont configurés de telle sorte que l'angle à comparer par rapport aux angles de seuil est calculé avec la formule :

$$\varepsilon = 180° - \text{arcos}\,[1/2(N/M + M/N - L^2/MN)] \qquad (14)$$

dans laquelle : M est la distance entre un système de détermination de position et le joint de cardan, N est la distance entre l'autre système de détermination de position et le joint de cardan,

L est la distance entre les deux systèmes de détermination de position,

ε est l'angle entre le bras (5) du cardan (3) et la projection de l'autre bras (4) du cardan (3) au-delà du cardan (3) lui-même.

**2.** Dispositif selon la revendication 1), **caractérisé en ce que** lesdits systèmes de détermination de position sont des systèmes de positionnement global, connus sous le nom de GPS.

**3.** Dispositif selon la revendication 1) ou la revendication 2), **caractérisé en ce que** des capteurs sont prévus des deux côtés du véhicule (1) ou de la remorque (2) ou des deux, aptes à détecter la présence de végétation à la distance utile pour effectuer l'opération pour laquelle une machine transportée par la remorque (2) est conçue.

**4.** Dispositif selon la revendication 3), **caractérisé en ce que** lesdits capteurs sont disposés inclinés par rapport au sol d'un tel angle de manière à éviter de détecter des objets à une trop grande distance par rapport aux capacités de la machine chargée sur la remorque (2).

**5.** Dispositif selon la revendication 3) ou la revendication 4), **caractérisé en ce que** l'un parmi les palpeurs, les cellules photoélectriques, les radars, les MEMS est choisi comme capteur.

**6.** Dispositif selon l'une quelconque des revendications précédentes, **caractérisé en ce qu'**il est apte à signaler un état anormal et à arrêter la prise de force si L dépasse la valeur de la somme de M et N.

**7.** Dispositif selon l'une quelconque des revendications 3) à 6), **caractérisé en ce que** lorsque, malgré le respect des conditions de fonctionnement de la prise de force, l'absence de végétation d'un ou des deux côtés est vérifiée, il envoie un signal d'absence de végétation à l'unité de traitement, qui envoie une commande de désengagement de la prise de force ou d'interruption du traitement du côté ou des côtés où il n'y a pas de végétation.

**8.** Dispositif selon la revendication 7), **caractérisé en ce qu'**une fois que les capteurs détectent à nouveau la présence de végétation, l'unité de traitement donne un signal pour redémarrer la prise de force ou pour redémarrer le traitement interrompu.

**9.** Dispositif selon l'une quelconque des revendications précédentes, **caractérisé en ce que** la relation S = S' s'applique, où S et S' sont les deux angles de seuil prédéfinis dans le dispositif.

**10.** Dispositif selon l'une quelconque des revendications 1) à 8), **caractérisé en ce que** la relation S > S' s'applique, où S et S' sont les deux angles de seuil prédéfinis dans le dispositif.

**2**    **5**    **4**

O

N    M

**3**

**1**

**Fig. 1**

**3**

**4**

O    M

N    h

**5**    **1**

**6**

**2**

**Fig. 2**

EP 3 902 385 B1

Fig. 3

**EP 3 902 385 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030024782 A
- WO 2017109746 A
- WO 2017050265 A
- WO 2017000234 A
- WO 2017125863 A